Europäisches Patentamt

European Patent Office

Office éuropéen des brevets

(11) Veröffentlichungsnummer: **0 320 489**
**A2**

(12) **EUROPÄISCHE PATENTANMELDUNG**

(21) Anmeldenummer: **88890313.5**

(22) Anmeldetag: **07.12.88**

(51) Int. Cl.⁴: **G 07 F 7/10**

(30) Priorität: **07.12.87 AT 3220/87**

(43) Veröffentlichungstag der Anmeldung:
**14.06.89 Patentblatt 89/24**

(84) Benannte Vertragsstaaten:
**AT BE CH DE FR GB LI**

(71) Anmelder: **AUTOMATIONS- UND
INFORMATIONSSYSTEME GESELLSCHAFT M.B.H.
Postfach 496
A-4010 Linz (AT)**

(72) Erfinder: **Schaumüller-Bichl, Ingrid, Dr.
Gierkeweg 23
A-4040 Linz (AT)**

(74) Vertreter: **Haffner, Thomas M., Dr.
Patentanwaltskanzlei Dipl.-Ing. Adolf Kretschmer Dr.
Thomas M. Haffner Schottengasse 3a
A-1014 Wien (AT)**

(54) Verfahren zur Erhöhung der Sicherheit einer IC-Karte und IC-Karte hierzu.

㉗ Bei einer IC-Karte (Chipkarte) mit einem Prozessor (10), einem Speicher (7), einem Chiffrierwerk (4) und einer Kopplungseinrichtung für das Eingeben und Ausgeben von Daten ist auf der Karte ein (Pseudo)-Zufallszahlengenerator (6) vorgesehen, dessen Ausgang unmittelbar oder unter Zwischenschaltung des Chiffrierwerkes (4) mit der Kopplungseinrichtung für die Ausgabe von Daten aus der IC-Karte verbindbar ist. Zur Erzielung sich ändernder Anfangsbedingungen kann ein gespeicherter Startwert mit dem Zählerstand eines Zählers (3) verknüpft werden, wobei der Chiffrieralgorithmus jeweils vom aktuellen Verknüpfungsresultat ausgeht.

FIG. 3

EP 0 320 489 A2

**Beschreibung**

### Verfahren zur Erhöhung der Sicherheit einer IC-Karte und IC-Karte hiezu

Die Erfindung bezieht sich auf ein Verfahren zur Erhöhung der Sicherheit bei der Verwendung von IC-Karten (Chipkarten) sowie auf eine IC-Karte mit einem Prozessor, einem Speicher, einem Chiffrierwerk und einer Kopplungseinrichtung für das Eingeben und Ausgeben von Daten zur Durchführung dieses Verfahrens.

Die Verwendung von IC-Karten als Datenträger ist insbesondere im Bank- und Sicherheitswesen bekannt. Gegenüber Karten, welche einen Magnetstreifen zur Datenspeicherung besitzen, ermöglichen Halbleiterspeicherkarten eine bessere Sicherung gegen unbefugten Zugriff und gegen unbefugtes Kopieren der gespeicherten Informationen. Bei IC-Karten, welche als aktive Karten bezeichnet werden, kontrolliert ein auf der Karte angeordneter Mikroprozessor den Zugang zum Speicher, wobei die Verbindung zu einem Rechner über eine an der Karte angeordnete Kopplungseinrichtung, beispielsweise an der Karte angeordnete Kontakte und in der Regel unter Zwischenschaltung einer "Card acceptor device" (CAD), d.h. eines beispielsweise als Steckkarte für den nachgeschalteten Rechner ausgebildeten Schaltkreises, welcher die Kommunikation mit dem Rechner ermöglicht, erfolgt.

Bei der Verwendung einer derartigen Karte liest die CAD bzw. der Prozessor der Karte bei Eingabe bestimmter Befehle an der gewünschten Adresse des Speichers Daten ein oder aus. Der Speicher selbst ist in der Regel in Bereiche mit unterschiedlichen Zugriffsregeln (frei zugänglich, geschützt, geheim,...) unterteilt.

Der Schutz der in der IC-Karte gespeicherten Daten kann auf unterschiedliche Weise erfolgen, etwa durch die Prüfung bestimmter Daten (z.B. Personal identification number (PIN), biometrische Parameter) in der Karte oder durch chiffrierte Speicherung der Daten auf der IC-Karte.

In vielen Anwendungen besteht jedoch der Bedarf nach einem zusätzlichen Schutz der IC-Karte - einer Prüfung der Authentizität des Kommunikationspartners (Kartenleser oder Hostrechner), bevor andere Kartenfunktionen wie Lesen, Schreiben oder PIN-Prüfung freigegeben werden.

Die Erfindung zielt nun darauf ab, ein Verfahren zur Erhöhung der Sicherheit bei der Verwendung von IC-Karten zu schaffen, mit welchem eine gegenseitige, nicht manipulierbare Authentifikation von IC-Karte und nachgeschaltetem Rechner ermöglicht wird, um einen höheren Schutz der Karte gegen unberechtigten Zugriff zu bieten. Zur Lösung dieser Aufgabe besteht das erfindungsgemäße Verfahren im wesentlichen darin, daß auf der Karte eine (Pseudo)-Zufallszahl generiert wird, daß diese (Pseudo)-Zufallszahl bei Beginn der Kartenbenützung von der Karte an den Rechner gesandt wird, daß vom Rechner die (Pseudo)-Zufallszahl nach einer Chiffrierung unter einem vorbestimmten Code an die Karte zurückgesandt wird und daß ohne Beeinflussung von außen ein neuer Startwert für die Generierung einer weiteren (Pseudo)-Zufallszahl in einem geheimen Bereich des Speichers der Karte abgelegt wird. Durch die Möglichkeit auf der Karte selbst eine (Pseudo)-Zufallszahl zu generieren, bestehen unterschiedliche bekannte Möglichkeiten für eine gegenseitige Authentizitätsprüfung. Ein Verfahren für eine derartige Authentizitätsprüfung kann davon ausgehen, daß beide Kommunikationspartner eine gemeinsame Information, nämlich den Authentifikationsschlüssel besitzen und ein gemeinsames Verfahren, wie beispielsweise ein Chiffriersystem aufweisen. Der authentifizierende Partner erzeugt eine (Pseudo)-Zufallszahl und sendet sie dem zu authentifizierenden Partner, worauf dieser aus der (Pseudo)-Zufallszahl unter Verwendung des Authentifikationsschlüssels und des Verfahrens eine Antwort sendet. Der jeweils die (Pseudo)-Zufallszahl absendende Partner führt zwischenzeitlich die gleichen Berechnungen durch und vergleicht die Ergebnisse. Bei Übereinstimmung des rückgesandten Ergebnisses mit dem eigenen Ergebnis der Berechnung bzw. Verschlüsselung gilt die Authentizität des Partners als erwiesen. Sogenannte intelligente IC-Karten (Chipkarten) mit eingebautem Mikroprozessor sind im allgemeinen in der Lage, sich einem Kartenlesegerät gegenüber zu authentifizieren. Umgekehrt kann jedoch die bekannte intelligente IC-Karte (Chipkarte) selbst nicht aktiv die Authentifikation des Lesegerätes vornehmen, so lange sie nicht selbst in der Lage ist, eine (Pseudo)-Zufallszahl zu generieren. Durch die Möglichkeit, auf der Karte selbst eine (Pseudo)-Zufallszahl zu generieren, wird ein Kriterium geschaffen, welches nicht manipulierbar ist, d.h. also von außen weder beeinflußbar ist, noch wiederholbar oder verhersagbar ist. Mit Rücksicht auf die komplexe Hardware zur Erzeugung einer (Pseudo)-Zufallszahl wird beim gegenwärtigen Stand der Integration von Halbleiterschaltkreisen auf der Karte zumeist nur die Herstellung einer (Pseudo)-Zufallszahl in Betracht zu ziehen sein. Die (Pseudo)-Zufallszahl kann in besonders einfacher Weise durch ein Chiffrierwerk erzeugt werden.

Die generierten (Pseudo)-Zufallszahlen können für das skizzierte Authentifikationsverfahren eingesetzt werden, sind jedoch auch im Rahmen anderer Verfahren, die das Vorhandensein eines (Pseudo)-Zufallszahlengenerators auf der IC-Karte (Chipkarte) voraussetzen, etwa des Fiat-Shamir-Verfahrens verwendbar. Wesentlich für das erfindungsgemäße Verfahren ist hiebei auch, daß der Startwert für den (Pseudo)-Zufallszahlengenerator in einem Bereich der IC-Karte bzw. Chipkarte gespeichert wird, der von außen weder lesbar noch veränderbar ist. Ein derartiger Bereich wird als geheimer Bereich des Speichers der Karte bezeichnet.

Die erstmalige Speicherung dieses Wertes auf der IC-Karte erfolgt in der Personalisierungsphase, wobei dieser ursprüngliche Startwert selbst eine (Pseudo)-Zufallszahl sein kann.

Nach jeder Erzeugung einer (Pseudo)-Zufallszahl wird der Startwert automatisch verändert. Diese Veränderung des Startwertes kann in einfacher Weise durch Erhöhung des Startwertes um eine fixe Zahl nach jeder Generierung einer (Pseudo)-Zufallszahl oder durch Ersetzen des alten Startwertes durch das Ergebnis der letzten Generierung einer (Pseudo)-Zufallszahl oder durch eine Kombination derartiger Verfahren erfolgen.

Die erfindungsgemäße IC-Karte zur Durchführung dieses Verfahrens weist einen Prozessor, einen Speicher, ein Chiffrierwerk und eine Kopplungseinrichtung für das Eingeben und Ausgeben von Daten auf. Zur Durchführung des erfindungsgemäßen Verfahrens ist die IC-Karte im wesentlichen dadurch gekennzeichnet, daß auf der Karte ein (Pseudo)-Zufallszahlengenerator vorgesehen ist, dessen Ausgang unmittelbar oder unter Zwischenschaltung des Chiffrierwerkes mit der Kopplungseinrichtung für die Ausgabe von Daten aus der IC-Karte verbindbar ist.

In besonders einfacher Weise kann der (Pseudo)-Zufallszahlengenerator von einem Chiffrierwerk gebildet sein. Mit einer derartigen Ausbildung der IC-Karte lassen sich (Pseudo)-Zufallszahlen generieren, welche nicht vorhersagbar sind, von außen nicht beeinflußbar sind und nicht wiederholbar sind. In der Authentifikationsphase kann von einer derartigen Karte somit eine nicht vorhersagbare (Pseudo)-Zufallszahl ausgesandt werden, wobei der Rechner diese (Pseudo)-Zufallszahl codiert zurücksendet. In der Karte muß hierauf lediglich der empfangene codierte Startwert mit dem Ergebnis der eigenen Chiffrierung verglichen werden, um auf diese Weise sicherzustellen, daß der Host-Rechner über die gleichen Verschlüsselungsvoraussetzungen verfügt wie die Karte. Es wird somit ausgehend von einem ursprünglich bei der Kartenpersonalisierung festgelegten Wert ein neuer, nicht ohne weiteres vorhersagbarer Wert gewählt, wodurch die Kenntnis eines derartigen Wertes für eine Authentifikation für die nächstfolgende Authentifikation wertlos wird, da aus der Analyse einer Chiffrierung der Code nicht ermittelt werden kann. Als erster Startwert kann der IC-Karte in üblicher Weise bei der Personalisierung eine (Pseudo)-Zufallszahl zur Verfügung gestellt werden, wobei der Startwert nur durch den Befehl bzw. den Aufruf der Funktion "Erzeugen einer (Pseudo)-Zufallszahl" auffindbar ist und gleichzeitig geändert wird. Der geänderte Startwert für die nächste Übertragung bzw. Kommunikation mit dem Rechner wird im Zuge dieser Authentifikationsphase wiederum im geheimen Speicherteil abgelegt und kann daher nicht ohne weiteres ausgelesen werden. Wesentlich bei dieser Verfahrensweise, welche eine derartige IC-Karte ermöglicht, ist somit die Tatsache, daß der Authentifizierungsschlüssel selbst nie übertragen wird, und da lediglich eine (Pseudo)-Zufallszahl bzw. eine chiffrierte (Pseudo)-Zufallszahl übertragen wird, hängt die Sicherheit des Systems allein von der kryptographischen Stärke des zugrundeliegenden Chiffriersystems ab, genauer von dessen Sicherheit gegen einen "Known-Plaintext"-Angriff.

Mit Vorteil ist die Ausbildung hiebei so getroffen, daß der (Pseudo)-Zufallszahlengenerator über eine Eingabe- und Ausgabeleitung mit einem von außen nicht adressierbaren Teil des Speichers verbunden ist. Eine derartige Anordnung erlaubt es, den Aufruf des Startwertes nur unter Kontrolle der CPU der Karte vorzunehmen, so daß die Möglichkeit einer Beeinflussung im geheimen Bereich des Speichers nicht gegeben ist. Als neuer, von außen nicht manipulierbarer Startwert kann der vorangegangene Chiffrierwert als Startwert für die Generierung der nächsten (Pseudo)-Zufallszahl herangezogen werden und dazu in dem von außen nicht lesbaren und nicht beschreibbaren Teil des Speichers der IC-Karte (Chip-Karte) abgelegt werden. Zusätzlich kann mit Vorteil die Ausbildung so getroffen sein, daß der Eingang des (Pseudo)-Zufallszahlengenerators bzw. des Chiffrierwerkes zur Erzeugung einer (Pseudo)-Zufallszahl zusätzlich mit dem Ausgang eines auf der Karte angeordneten Zählers verbunden ist, wobei ein derartiger Zähler, dessen Zählerstand bei jeder Generierung beispielsweise um 1 erhöht werden kann, das Entstehen von sogenannten Schleifen verhindert. Die Qualität der (Pseudo)-Zufallszahl, welche für die nächstfolgende Authentifikationsphase Verwendung findet, kann dadurch verbessert werden. Bei der Verwendung eines Chiffrierwerkes zur Erzeugung einer (Pseudo)-Zufallszahl können in der Folge Verschlüsselungsverfahren angewandt werden, bei welchen im Idealfall die Änderung eines Input-Bits eine Änderung von 50 % der Output-Bits zur Folge hat, so daß sich eine gute 0/1-Verteilung sowie eine starke Fehlerfortpflanzung ergibt.

Wesentlich hiebei ist, daß nicht nur die Generierung einer (Pseudo)-Zufallszahl lediglich unter der Kontrolle der CPU der Karte stattfindet, sondern auch die automatisch erfolgende Abspeicherung der sich ergebenden neuen (Pseudo)-Zufallszahl für die nächstfolgende Kommunikation nur unter der Kontrolle der CPU der Karte in einem geheimen Bereich ohne Möglichkeit einer Manipulation abgespeichert wird. Zu diesem Zweck ist die Ausbildung mit Vorteil so getroffen, daß der (Pseudo)-Zufallszahlengenerator zur Durchführung eines Schreibvorganges in dem von außen nicht adressierbaren Teil des Speichers nach jedem Lesevorgang in dem von außen nicht adressierbaren Teil des Speichers ausgebildet ist.

Um die für eine derartig nur unter der Kontrolle der CPU, welche auf der Karte angeordnet ist, ablaufende Ausführung der Funktion "Erzeugen einer (Pseudo)-Zufallszahl" korrekt durchzuführen, ist mit Vorteil die Ausbildung so getroffen, daß das Chiffrierwerk über Eingabe- und Ausgabeleitungen mit dem (Pseudo)-Zufallszahlengenerator verbindbar ist oder über Ausgabeleitungen und gegebenenfalls eine Logikschaltung mit dem von außen nicht adressierbaren Teil des Speichers verbindbar ist, wobei die gegebenenfalls vorgesehene Logikschaltung dem Vergleich des abgesandten codierten Wertes mit dem zurückerhaltenen neuerlich codierten Wert dient, um die Korrektheit des Authentifikationsschlüssels zu verifizieren.

Die Erfindung wird nachfolgend an Hand von in der Zeichnung schematisch dargestellten Ausführungsbeispielen in Form von Blockschaltbildern näher erläutert: Fig.1 stellt ein Blockschaltbild zur Generierung einer (Pseudo)-Zufallszahl auf einer IC-Karte (Chip-Karte) dar, Fig.2 zeigt eine erweiterte Ausführungsform einer Generierung einer (Pseudo)-Zufallszahl auf einer IC-Karte und Fig.3 zeigt ein Blockschaltbild einer gesamten IC-Karte.

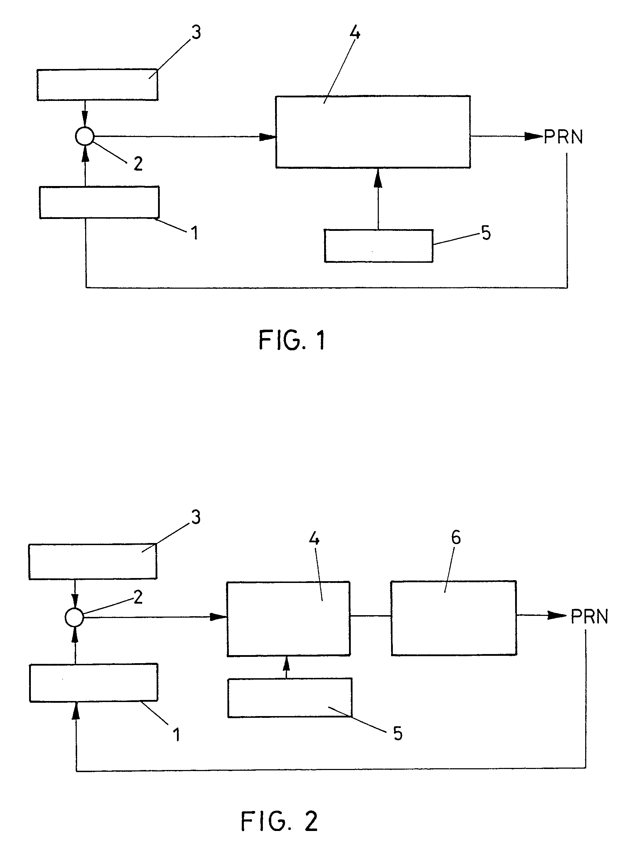

In Fig.1 ist in einem Speicher 1 auf einer IC-Karte ein Startwert gespeichert, welcher nach einer Verknüpfung mit einem von einem Zähler 3 stammenden Wert in einem Verknüpfungsglied 2 mittels eines Chiffrierwerkes 4 chiffriert wird. Dem Chiffrierwerk 4 wird dabei ein Schlüssel 5 zur Verfügung gestellt. Bei jedem Aufruf einer Funktion "Erzeugen einer (Pseudo)-Zufallszahl" dient der Startwert aus dem Speicher 1 in Kombination mit dem Zählerstand des Zählers 3 als Eingangswert für das Chiffrierwerk 4, wobei das Ergebnis des Chiffrieralgorithmus, die (Pseudo)-Zufallszahl PRN, gleichzeitig als neuer Startwert für den nächsten Aufruf dieser Funktion dient. Der Zähler 3, dessen Zählerstand bei jeder Generierung um eins erhöht wird, wodurch das Entstehen von Schleifen verhindert wird, und der Startwert stehen dabei in einem von außen nicht lesbaren und nicht veränderbaren Bereich des Speichers der IC-Karte und sind lediglich durch die Funktion "Erzeugen einer (Pseudo)-Zufallszahl" auffindbar. Bei der Personalisierung anläßlich der Herstellung der Karte wird extern eine (Pseudo)-Zufallszahl erzeugt und auf die Karte als erster Startwert eingeschrieben. Durch die Verschlüsselung der vom Verknüpfungsglied 2 gelieferten Eingangswerte im Chiffrierwerk 4 ergibt sich eine gute 0/1-Verteilung sowie eine starke Fehlerfortpflanzung, wodurch im Idealfall eine Änderung eines Input-Bits eine Änderung von 50 % der Output-Bits zur Folge hat. Durch eine Erzeugung einer (Pseudo)-Zufallszahl PRN, wie sie im Blockschaltbild der Fig.1 beschrieben ist, wird sichergestellt, daß eine derartig generierte (Pseudo)-Zufallszahl nicht vorhersagbar und nicht wiederholbar ist und eventuell einer vorgegebenen Verteilung entspricht.

Zur Chiffrierung nach dem Chiffrieralgorithmus können als Chiffrierschlüssel 5 unter anderem ein im geheimen Bereich der Karte gespeicherter und für jede Karte verschiedener Parameter, der im Speicher 1 gespeicherte Startwert oder Daten, die an einer vorgegebenen Speicheradresse stehen, verwendet werden. Für eine Rückkopplung ergeben sich dabei als Möglichkeiten zur Erzeugung bzw. Änderung des Startwertes einerseits die Bildung des neuen Startwertes als PRN der vorhergehenden Runde, wie dies in Fig.1 dargestellt ist, oder eine Bildung eines neuen Startwertes durch Verknüpfung des alten Startwertes mit der alten (Pseudo)-Zufallszahl.

Blockchiffriersysteme erzeugen im allgemeinen binäre Folgen mit guten statistischen Eigenschaften, wie beispielsweise einer Gleichverteilung von 0 und 1, wobei zur Erzeugung anderer statistischer Eigenschaften eine Erweiterung vorgesehen sein kann, wie dies in Fig.2 schematisch dargestellt ist. Bei der Darstellung nach Fig.2 wird wiederum ein Startwert aus einem Speicher 1 mit einem Zählwert des Zählers 3 in einem Verknüpfungsglied 2 verknüpft und einem Chiffrierwerk 4, welchem ein Schlüssel zugeführt wird, übergeben. Als Erweiterung zur Erzielung gewünschter statistischer Eigenschaften ist bei diesem Ausführungsbeispiel im Anschluß an das Chiffrierwerk 4 noch ein weiterer (Pseudo)-Zufallszahlengenerator 6 vorgesehen, welcher die (Pseudo)-Zufallszahl PRN liefert. Wie bei dem Ausführungsbeispiel gemäß Fig.1 kann auch bei dieser Ausführungsform die auf diese Weise gebildete (Pseudo)-Zufallszahl PRN wiederum als neuer Startwert für eine nächste Generierung Verwendung finden.

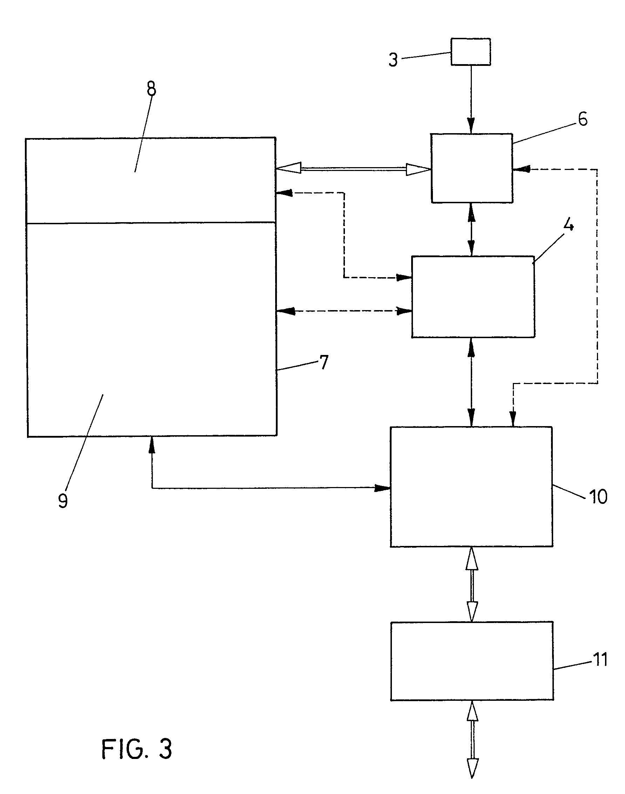

Bei dem in Fig.3 dargestellten Ausführungsbeispiel sind die Bezugszeichen der Fig.1 und 2 beibehalten worden, wobei neben weiteren Ausführungsformen der Generierung einer (Pseudo)-Zufallszahl in dem in Fig.3 dargestellten Blockschaltbild weitere Elemente einer IC-Karte dargestellt sind. Neben einem Zähler 3, einem (Pseudo)-Zufallszahlengenerator 6 und einem Chiffrierwerk 4 ist bei der Darstellung nach Fig.3 auch ein Speicher 7 dargestellt, wobei dieser Speicher in zwei Bereiche 8 und 9 unterteilt ist. Der Speicherbereich 8 bezeichnet dabei den geheimen, von außen nicht lesbaren und nicht veränderbaren Bereich des Speichers, während der Speicherbereich 9 den nicht geheimen Bereich darstellt. Weiters sind noch eine Zentraleinheit 10 sowie eine Eingabe/Ausgabe-Einheit 11 vorgesehen. Bei dem in Fig.3 dargestellten Ausführungsbeispiel wird dem geheimen Speicherbereich 8 ein Startwert entnommen, welcher gemeinsam mit einem Zählwert aus dem Zähler 3 einem (Pseudo)-Zufallszahlengenerator 6 zugeführt wird. Der Ausgang des (Pseudo)-Zufallszahlengenerators kann nun entweder unmittelbar mit der Zentraleinheit 10 und mit der Eingabe/Ausgabe-Einheit 11 verbunden werden oder es kann die im (Pseudo)-Zufallszahlengenerator 6 erzeugte (Pseudo)-Zufallszahl über das Chiffrierwerk 4 der Zentraleinheit 10 zugeführt werden. Zur Kontrolle zu Beginn der Authentifikationsphase kann daher von der Karte unter Umgehung des Chiffrierwerkes 4 einem Host-Rechner ein nicht ohne weiteres vorhersagbarer Startwert über die Zentraleinheit 10 und die Eingabe/Ausgabe-Einheit 11 übersandt werden, wobei dieser Rechner den Startwert codiert zurücksendet. In der Karte wird hierauf lediglich der empfangene codierte Startwert mit dem Ergebnis der eigenen Chiffrierung verglichen, um auf diese Weise sicherzustellen, daß der Rechner über die gleichen Verschlüsselungsvoraussetzungen verfügt wie die Karte. Durch die Speicherung des Startwertes in einem von außen nicht direkt adressierbaren Teil des Speichers 8 wird dabei die Möglichkeit einer Beeinflussung dieses Startwertes wesentlich beschränkt. Durch die Generierung der (Pseudo)-Zufallszahl im (Pseudo)-Zufallszahlengenerator 6 bzw. deren weitere Verarbeitung im Chiffrierwerk 4 durch Zugriff auf einen Startwert im von außen nicht adressierbaren Teil des Speichers wird auch in der Authentifikationsphase dieser Speicherbereiche nach außen nicht freigegeben. Die automatisch erfolgende Abspeicherung der sich ergebenden (Pseudo)-Zufallszahl, welche als neuer Startwert Verwendung finden kann, wie dies in den Blockschaltbildern der Fig.1 und 2 ausführlich erläutert wurde, findet dabei wiederum in dem geheimen bzw. geschützten Bereich 8 des Speichers ohne Möglichkeit einer Manipulation von außen statt. Wie dies in Fig.3 weiters angedeutet wurde, kann das Chiffrierwerk 4 auch mit dem nicht geheimen Bereich 9 des Speichers verbunden werden, ebenso wie die CPU 10 mit dem nicht geheimen Bereich des Speichers 9 verbunden ist.

**Patentansprüche**

1. Verfahren zur Erhöhung der Sicherheit bei der Verwendung von IC-Karten, dadurch gekennzeichnet, daß auf der Karte eine (Pseudo)-Zufallszahl (PRN) generiert wird, daß diese (Pseudo)-Zufallszahl (PRN) bei Beginn der Kartenbenützung von der Karte an den Rechner gesandt wird, daß vom Rechner die (Pseudo)-Zufallszahl nach einer Chiffrierung unter einem vorbestimmten Code an die Karte zurückgesandt wird und daß ohne Beeinflussung von außen ein neuer Startwert für die Generierung einer weiteren (Pseudo)-Zufallszahl in einem geheimen Bereich (8) des Speichers (1,7) der Karte abgelegt wird.

2. IC-Karte mit einem Prozessor (10), einem Speicher (1,7), einem Chiffrierwerk (4) und einer Kopplungseinrichtung (11) für das Eingeben und Ausgeben von Daten, dadurch gekennzeichnet, daß auf der Karte ein (Pseudo)-Zufallszahlengenerator (6) vorgesehen ist, dessen Ausgang unmittelbar oder unter Zwischenschaltung des Chiffrierwerkes (4) mit der Kopplungseinrichtung (11) für die Ausgabe von Daten aus der Halbleiterspeicherkarte verbindbar ist.

3. IC-Karte nach Anspruch 2, dadurch gekennzeichnet, daß der (Pseudo)-Zufallszahlengenerator von einem Chiffrierwerk (4) gebildet ist.

4. IC-Karte nach Anspruch 2 oder 3, dadurch gekennzeichnet, daß der (Pseudo)-Zufallszahlengenerator (4,6) über eine Eingabe- und Ausgabeleitung mit einem von außen nicht adressierbaren Teil (8) des Speichers verbunden ist.

5. IC-Karte nach Anspruch 2 oder 3, dadurch gekennzeichnet, daß der Eingang des (Pseudo)-Zufallszahlengenerators (6) bzw. des Chiffrierwerkes (4) zur Erzeugung einer (Pseudo)-Zufallszahl (PRN) zusätzlich mit dem Ausgang eines auf der Karte angeordneten Zählers (3) verbunden ist.

6. IC-Karte nach einem der Ansprüche 2 bis 5, dadurch gekennzeichnet, daß der (Pseudo)-Zufallszahlengenerator (6) zur Durchführung eines Schreibvorganges in dem von außen nicht adressierbaren Teil (8) des Speichers nach jedem Lesevorgang in dem von außen nicht adressierbaren Teil des Speichers (7) ausgebildet ist.

7. IC-Karte nach einem der Ansprüche 2 bis 6, dadurch gekennzeichnet, daß das Chiffrierwerk (4) über Eingabe- und Ausgabeleitungen mit dem (Pseudo)-Zufallszahlengenerator (6) verbindbar ist oder über Ausgabeleitungen und gegebenenfalls eine Logikschaltung mit dem von außen nicht adressierbaren Teil (8) des Speichers verbindbar ist.

FIG. 1

FIG. 2

FIG. 3